# EUROPEAN PATENT APPLICATION

(11) **EP 2 637 103 A1**
(43) Date of publication of application: **11.09.2013**
(21) Application number: 10859267.6
(22) Date of filing: 05.11.2010
(51) Int. Cl.: G06F 13/14, G06F 13/10

(54) **DISCONNECT PROGRAM, EMBEDDING PROGRAM, DISCONNECT METHOD, AND EMBEDDING METHOD**

(71) Applicant: Fujitsu Limited, Kawasaki-shi, Kanagawa 211-8588 (JP)
(72) Inventor: KOSEKI, Takahiro, Kawasaki-shi, Kanagawa 211-8588 (JP)
(74) Representative: HOFFMANN EITLE
(86) International application number: PCT/JP2010/069703
(87) International publication number: WO 2012/060011

(57) **Abstract**

A detaching program to be operated on a control OS for controlling a virtual OS, that detaches a physical input/output device of the control OS from the control OS and that causes a computer having stored virtual input/output device information in which the physical input/output device and the virtual input/output device are associated and virtual OS information in which the virtual input/output device and the virtual OS are associated to execute: a step of receiving an instruction to detach the physical input/output device, a step of referring to the virtual input/output device information and the virtual OS information so as to determine the virtual input/output device corresponding to the physical input/output device and the virtual OS that is using the virtual input/output device, a step of transmitting to the determined virtual OS an instruction to detach the determined virtual input/output device, a step of receiving from the determined virtual OS a fact that the determined virtual input/output device has been detached, and a step of detaching the physical input/output device from the control OS after receiving the fact that the determined virtual input/output device has been detached.

## Description

### Technical Field

The present invention relates to detaching and mounting of an input/output device.

### Background Art

In a system having a virtual system, a system having a virtualization service converts an I/O device such as a disk, a PCI (Peripheral Component Interconnect) card, etc. into a virtual I/O device so as to provide the conversion result to the virtual system.

Virtualization services have a function of converting physical resources into logical resources for a virtual operating system (OS) as described above.
When devices (I/O devices) such as disks, PCI cards, etc. are to be switched without turning off the computer (hot plug or hot swap), a system having a virtualization service (control OS) and a system using the virtual I/O (virtual OS) both detach the devices, and mount new devices after the switching.

When, for example, a device has been detached from a control OS while the virtual device corresponding to the device has forgetfully not been detached, accesses to the virtual device in the virtual OS cause errors.

As described above, complex steps have to be followed in order to detach a device from or mount a device on a control OS and a virtual OS that is using the virtual I/O, which has often led to problems of forgetting to detach or mount the device, causing problems.

Patent Document 1: Japanese Laid-open Patent Publication No. 2006-331421
Patent Document 2: Japanese Laid-open Patent Publication No. 2009-123217
Patent Document 3: Japanese Laid-open Patent Publication No. 07-084810

### Disclosure of the Invention

### Problem to be Solved by the Invention

It is an object of the present invention to provide a detaching program and a mounting program that reduce problems upon detaching or mounting of an input/output device.

### Means for Solving the Problem

A detaching program according to one aspect of the embodiments is a detaching program to be operated on a control operating system for controlling a virtual operating system that detaches a physical input/output device of the control operating system from the control operating system and that causes a computer having stored virtual input/output device information in which the physical input/output device and the virtual input/output device are associated and virtual operating system information in which the virtual input/output device and the virtual operating system are associated, to execute a process, the process including: a step of receiving an instruction to detach the physical input/output device, a step of referring to the virtual input/output device information and the virtual operating system information so as to determine the virtual input/output device corresponding to the physical input/output device and the virtual operating system that is using the virtual input/output device, a step of transmitting to the determined virtual operating system an instruction to detach the determined virtual input/output device, a step of receiving from the determined virtual operating system a fact that the determined virtual input/output device has been detached, and a step of detaching the physical input/output device from the control operating system after receiving the fact that the determined virtual input/output device has been detached.

A mounting program according to one aspect of the embodiments is a mounting program to be operated on a control operating system for controlling a virtual operating system, that mounts a physical input/output device of the control operating system on the control operating system and that causes a computer having stored virtual input/output device information in which the physical input/output device and the virtual input/output device are associated and virtual operating system information in which the virtual input/output device and the virtual operating system are associated to execute a process, the process including: a step of receiving an instruction to mount the physical input/output device, a step of mounting the physical input/output device on the control operating system, a step of referring to the virtual input/output device information and the virtual operating system information so as to determine the virtual input/output device corresponding to the physical input/output device and the virtual operating system that is using the virtual input/output device, a step of transmitting to the determined virtual operating system an instruction to mount the determined virtual input/output device, and a step of receiving from the determined virtual operating system a fact that the determined virtual input/output device has been mounted.

A detaching program according to one aspect of the embodiments is a detaching program to be operated on a control operating system for controlling a virtual operating system, that detaches a physical input/output device related to a virtual input/output device from the control operating system and that causes a computer having stored virtual input/output device information in which the physical input/output device and the virtual input/output device are associated and virtual operating system information in which the virtual input/output device and the virtual operating system are associated to execute a process, the process including: a step of receiving an instruction to detach the physical input/output device related to the virtual input/output device from the virtual operating system that is using the virtual input/output device, a step of referring to the virtual input/output device information and the virtual operating system information so as to determine the physical input/output device related to the virtual input/output device, a different virtual input/output device related to the virtual input/output device, and a different virtual operating system that is using the different virtual input/output device, a step of transmitting to the different virtual operating system an instruction to detach the different virtual input/output device, a step of receiving from the different virtual operating system a fact that the different virtual input/output device has been detached, a step of detaching the physical input/output device related to the virtual input/output device from the control operating system, and a step of transmitting to the virtual operating system that is using the virtual input/output device a fact that the physical input/output device related to the virtual input/output device has been detached.

A detaching program according to one aspect of the embodiments is a detaching program to be operated on a virtual operating system controlled by a control operating system, that detaches a virtual input/output device from the virtual operating system and that causes a computer to execute a process, the process including: a step of receiving an instruction to detach the virtual input/output device, a step of detaching the virtual input/output device from the virtual operating system, a step of transmitting to the control operating system an instruction to detach a physical input/output device related to the virtual input/output device, and a step of receiving from the control operating system a fact that the physical input/output device related to the virtual input/output device has been detached.

A mounting program according to one aspect of the embodiments is a mounting program to be operated on a control operating system for controlling a virtual operating system, that mounts a physical input/output device related to a virtual input/output device on the control operating system and that causes a computer having stored virtual input/output device information in which the physical input/output device and the virtual input/output device are associated and virtual operating system information in which the virtual input/output device and the virtual operating system are associated to execute a process, the process including: a step of receiving, from the virtual operating system that is using the virtual input/output device, an instruction to mount the physical input/output device related to the virtual input/output device, a step of referring to the virtual input/output device information and the virtual operating system information so as to determine the physical input/output device related to the virtual input/output device, a different virtual input/output device related to the virtual input/output device, and a different virtual operating system that is using the different virtual input/output device, a step of mounting the physical input/output device related to the virtual input/output device on the control operating system, a step of transmitting to the different virtual operating system an instruction to mount the different virtual input/output device, a step of receiving from the different virtual operating system a fact that the different virtual input/output device has been mounted, and a step of transmitting to the virtual operating system that is using the virtual input/output device a fact that the physical input/output device related to the virtual input/output device has been mounted.

A mounting program according to one aspect of the embodiments is a mounting program to be operated on a virtual operating system controlled by a control operating system, that mounts a virtual input/output device on the virtual operating system and that causes a computer to execute a process, the process including: a step of receiving an instruction to mount the virtual input/output device, a step of transmitting to the control operating system an instruction to mount a physical input/output device related to the virtual input/output device, a step of receiving from the control operating system a fact that the physical input/output device related to the virtual input/output device has been mounted, and a step of mounting the virtual input/output device on the virtual operating system after receiving the fact that the physical input/output device related to the virtual input/output device has been mounted.

### Advantage of the Invention

According to a program of an embodiment, an input/output device related to a detaching/mounting-target input/output device (including a virtual input/output device) is detached or mounted automatically, making it possible to reduce troubles caused by forgetting to detach or mount the device.

### Brief Description of the Drawings

FIG. 1 illustrates a configuration of a server according to an embodiment;
FIG. 2 illustrates a configuration of software according to an embodiment;
FIG. 3 illustrates an example of a virtual OS information table;
FIG. 4 illustrates an example of a virtual I/O information table;
FIG. 5 illustrates an example of a format of communication data transmitted and received between a communication mechanism of a control OS and a communication mechanism of a virtual OS;
FIG. 6 is a flowchart for a virtual service unit according to an embodiment;
FIG. 7 illustrates a flowchart of a communication mechanism of the control OS according to an embodiment;
FIG. 8 illustrates a flowchart for a communication mechanism of the virtual OS according to an embodiment;
FIG. 9 is a flowchart for a driver of the control OS according to an embodiment;
FIG. 10 illustrates a flowchart for a driver of the virtual OS according to an embodiment;
FIG. 11 is a sequence diagram for a case where an I/O is detached from the control OS;
FIG. 12 is a sequence diagram for a case where an I/O is mounted from the control OS;
FIG. 13 illustrates a sequence diagram for a case where an I/O not shared by a different virtual OS is detached from a virtual OS;
FIG. 14 is a sequence diagram for a case where an I/O that is not shared by a different virtual OS is mounted from a virtual OS;
FIG. 15 is a sequence diagram illustrating a case where an instruction has been issued to detach an I/O shared by a plurality of virtual OSs from a virtual OS; and
FIG. 16 is a sequence diagram for a case where an instruction has been issued to detach an I/O shared by a plurality of virtual OSs from a virtual OS.

### Embodiments for Carrying Out the Invention

Hereinafter, embodiments of the present invention will be explained by referring to the drawings.

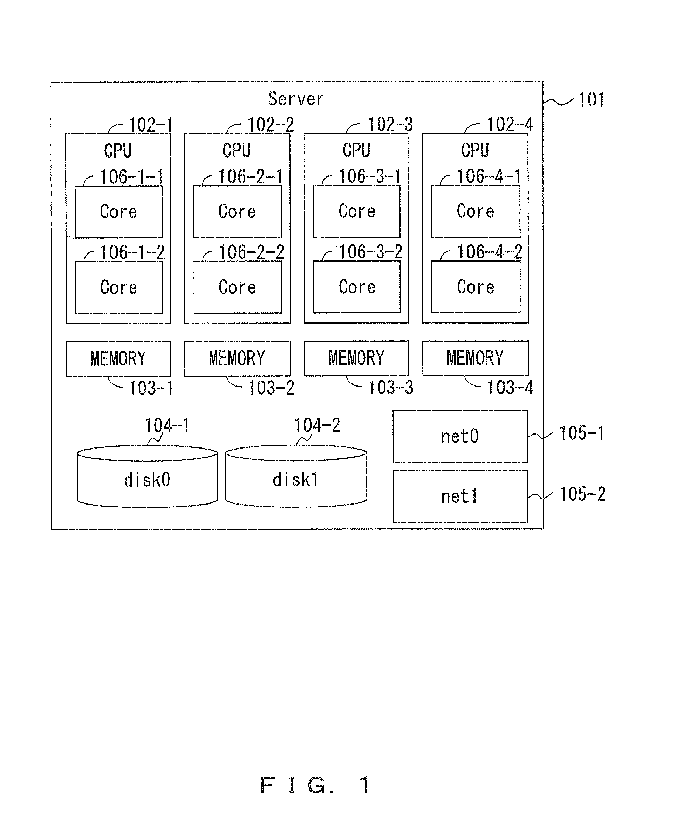

FIG. 1 illustrates a configuration of a server according to an embodiment.
A server 101 includes Central Processing Units (CPUs) 102-n (n=1 through 4), memories 103-n, disks 104-m (m=1 or 2), and network cards 105-m.

The respective CPUs 104-n include cores 106-n-m.
The cores 106 execute various processes of programs or the like.
The memories 103 store various types of data temporarily.
Random Access Memories (RAMs) for example are used as the memories 103.

The disks 104 store various types of data. Magnetic disk devices may for example be used as the disks 104.
The network cards 105 are interfaces for implementing communications.

In an embodiment, disk0 and disk1 are assigned to the disks, while net0 and net1 are assigned to the network cards as identifiers.

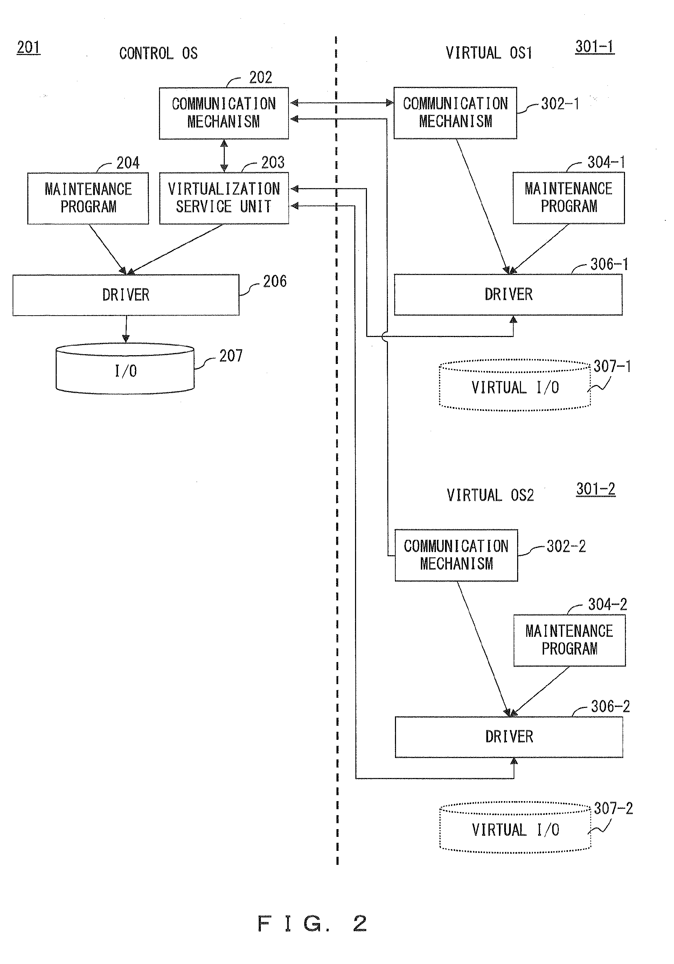

FIG. 2 illustrates a configuration of software according to an embodiment.
A control OS 201 and virtual OSs 301-m (m=1 or 2) have been installed and executed in the server 101 according to an embodiment. In an embodiment, two virtual OSs 301-1 and 301-2 are operating. Further, in an embodiment, the virtual OSs 301-1 and 301-2 are referred to as virtual OS1 and virtual OS2, respectively.

The control OS 201 controls the virtual OSs 301. Also, the control OS 201 and the virtual OSs 301 have a hot-plug function (hot-swap function), which detaches an I/O (including a virtual I/O) from the control OS 201 or the virtual OSs 301 dynamically.

The control OS 201 includes a communication mechanism 202, a virtualization service unit 203, a maintenance program 204, and a driver 206.
The communication mechanism 202 communicates with the virtual OSs 301.

The virtualization service unit 203 provides a virtualization service, and converts an I/O (physical I/O device) 207, which is a physical resource, into a virtual I/O (value I/O device) 307. The I/O 207 corresponds to the disk 104 and the network card 105.

The maintenance program 204 gives instructions to detach or mount the I/O 207.
The driver 206 detaches and mounts the I/O 207. Detaching of an I/O is an operation of electrically detaching an I/O from an OS, making the OS unable to recognize the I/O so that the I/O may be replaced by a different I/O. As specific operations, a driver that has received a detaching instruction halts a target I/O, and halts the driver itself too. Mounting of an I/O is a reverse operation, i.e., making an OS recognize an I/O that has been in an electrically detached state, putting the I/O in a usable state. As specific operations, the power of the I/O is turned ON, the driver is attached, and the I/O is activated.

The virtual OSs 301-m include communication mechanisms 302-m, maintenance programs 304-m, and drivers 306-m.
The communication mechanisms 302 communicate with the control OS 201.

The maintenance programs 304 give instructions to detach or mount the virtual I/Os.
The drivers 306 detach and mount the virtual 1/Os. Detaching of a virtual I/O is an operation of detaching the virtual I/Os from the virtual OSs 301 electrically, making the virtual OSs 301 unable to recognize the virtual 1/Os so that the virtual I/Os can be replaced with different I/Os . Mounting of a virtual I/O is a reverse operation, i.e., making the virtual OSs 301 recognize the virtual I/Os that have been in an electrically detached state, and putting the virtual I/Os in a usable state.

Next, information tables used for a hot swap process according to an embodiment will be explained.

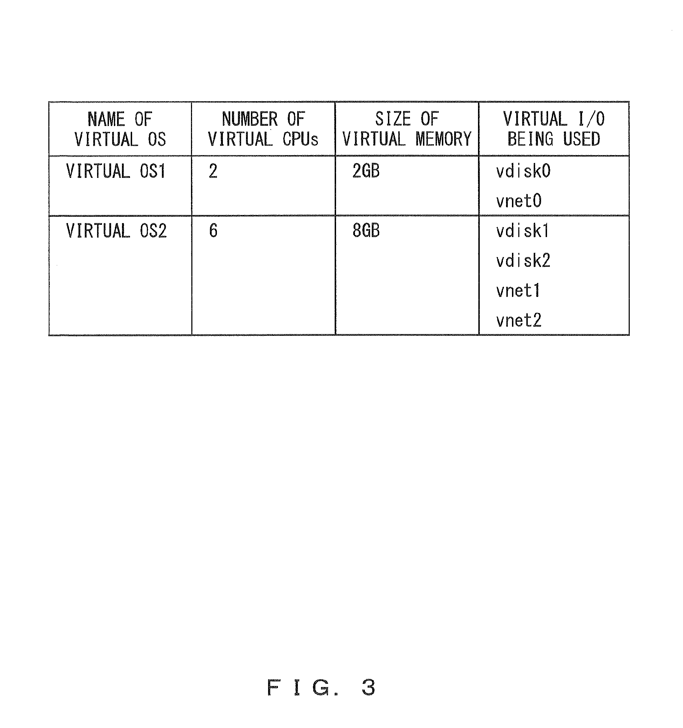

FIG. 3 illustrates an example of a virtual OS information table.
On the virtual information table, virtual OS names, the number of virtual CPUs, virtual memory sizes, and virtual I/Os are described in an associated manner.

For virtual OS names, the identifiers of virtual OSs controlled by the control OS are described.
For the number of virtual CPUs, the number of CPUs used by the virtual OSs are described. In this example, the number of virtual CPUs are the number of cores.

For virtual memory sizes, the sizes of memories used by the virtual OSs are described.
For virtual I/Os, the identifiers of virtual I/Os used by the virtual OSs are described.
In an embodiment, virtual OS1 uses two CPUs, a 2-gigabyte memory, and virtual I/Os vdisk0 and vnet0. Also, virtual OS2 uses six CPUs, a 3-gigabyte memory, and virtual I/Os vdisk1, vdisk2, vnet1, and vnet2.

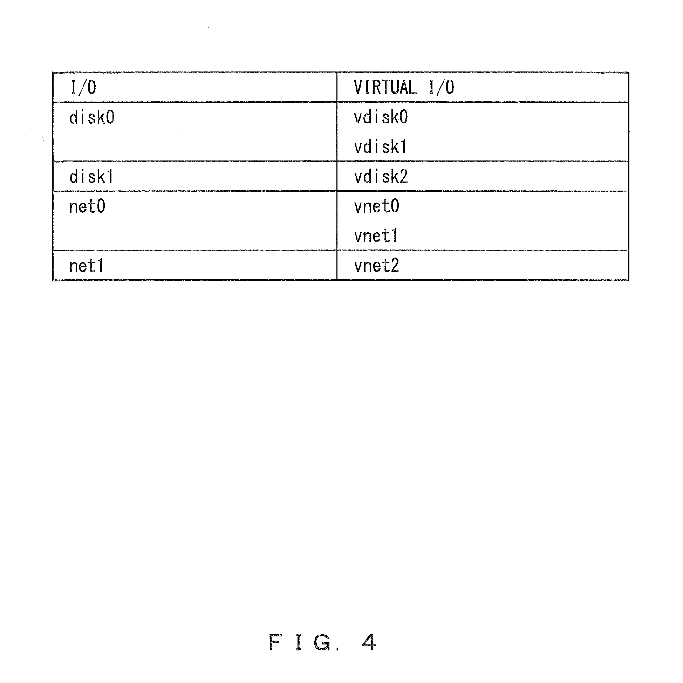

FIG. 4 illustrates an example of a virtual I/O information table.
On the virtual I/O information table, I/Os and virtual I/Os are described in an associated manner.
For I/Os, the identifiers of I/Os are described.

For virtual I/Os, the identifiers of virtual I/Os used on virtual OSs are described.
In an embodiment, disk0 is used as vdisk0 and vdisk1 on a virtual OS, and disk1 is used as vdisk2 on a virtual OS.

Also, net0 is used as vnet0 and vnet1 on a virtual OS, and net1 is used as vnet2 on a virtual OS.
The virtual OS information table and the virtual I/O information table are stored in, for example, the memory 103.

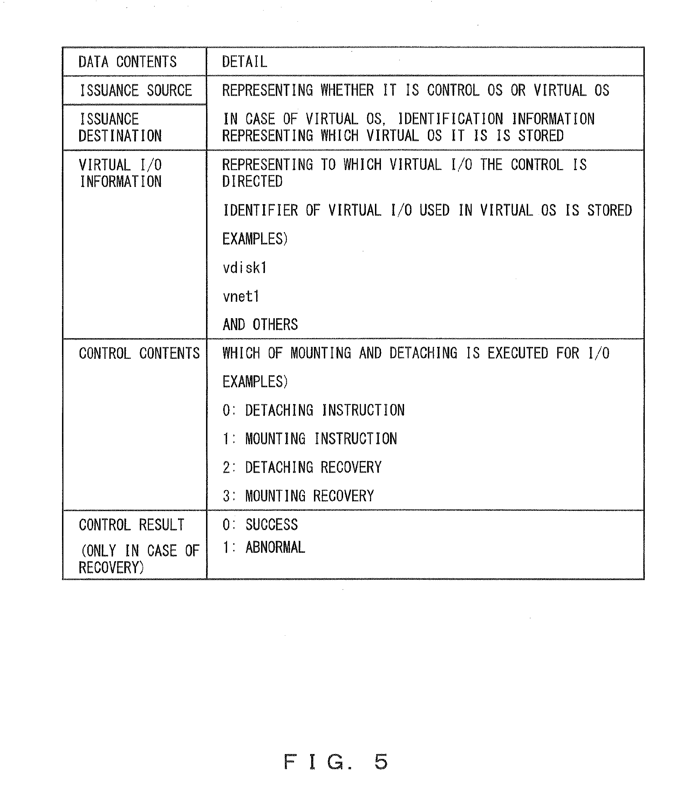

FIG. 5 illustrates an example of a format of communication data transmitted and received between the communication mechanism of the control OS and the communication mechanism of a virtual OS.
Communication data includes issuance sources, issuance destinations, virtual I/O information, control content, and control results.

An issuance source is an OS that issues communication data. Identifiers of, for example, control OSs and virtual OSs are described.
An issuance destination is an OS that is a destination of communication data. Identifiers of, for example, control OSs and virtual OSs are described.

Virtual I/O information is an identifier that represents an I/O as a target of detaching or mounting. For example, vdisk1, vnet1, or the like are described as virtual I/O information.
Control contents are types of control that are to be or have been executed by the control OS or a virtual OS. Example of control contents is a detaching instruction, a mounting instruction, detaching recovery, or mounting recovery.

A control result represents whether detaching or mounting has succeeded or failed (abnormal). Note that control results are used only in cases where the control content is detaching recovery or mounting recovery.

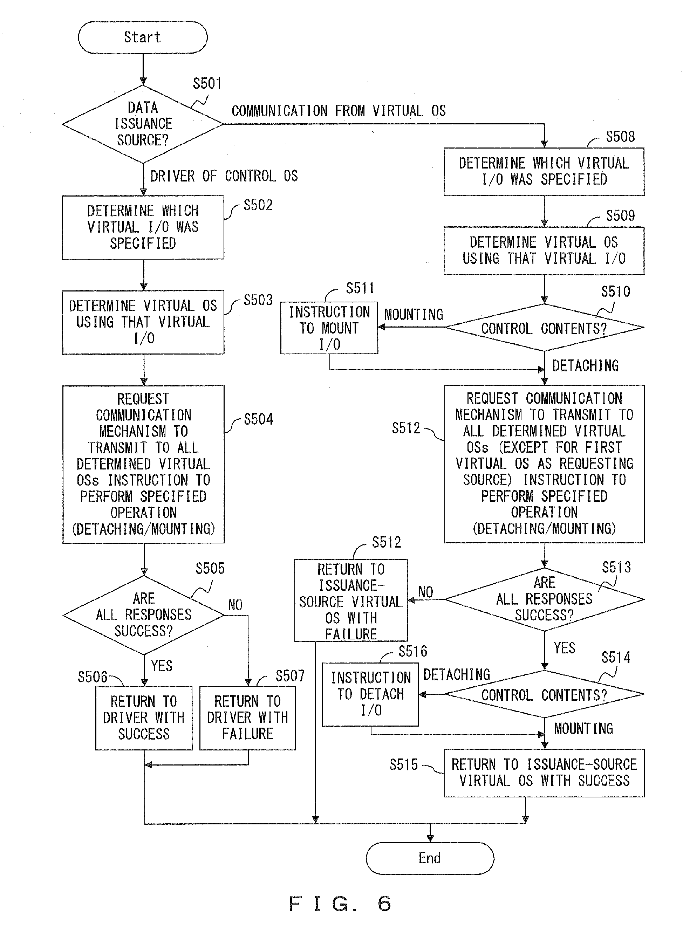

FIG. 6 is a flowchart for a virtual service unit according to an embodiment.
In step S501, the virtualization service unit 203 determines an issuance source of communication data that has been received. When the issuance source is the driver 206 of the control OS 201, the control proceeds to step S502, and when the issuance source is the virtual OS 301, the control proceeds to step S508.

In step S502, the virtualization service unit 203 refers to the virtual I/O information table so as to determine which of the virtual I/Os has been specified.
In step S503, the virtualization service unit 203 refers to the virtual OS information table so as to determine the virtual OSs 301 that are using the determined virtual I/O.

In step S504, the virtualization service unit 203 requests the communication mechanism 202 of the control OS to give to all determined virtual OSs an instruction to perform a specified operation (detaching or mounting).

In step S505, the virtualization service unit 203 determines whether or not all responses to the specified operations are "success". When all responses are "success", the control proceeds to step S506, and when at least one response is "failure", the control proceeds to step S507.

In step S506, the virtualization service unit 203 returns to a driver 506 with the result of "success" (response of success in mounting the virtual I/O).
In step S507, the virtualization service unit 203 returns to the driver 506 with the result of "failure" (response of failure in mounting the virtual I/O).

In step S508, the virtualization service unit 203 refers to the virtual I/O information table so as to determine an I/O and a virtual I/O related to the specified I/O.
In step S509, the virtualization service unit 203 refers to the virtual OS information table so as to determine the virtual OS 301 that is using the determined virtual I/O.

In step S510, the virtualization service unit 203 determines the control content. When the control content is mounting, the control proceeds to step S511, and when the control content is detaching, the control proceeds to step S512 .

In step S511, the virtualization service unit 203 instructs the driver 206 to mount the determined I/O.
In step S512, the virtualization service unit 203 requests the communication mechanism 202 of the control OS to give to all determined virtual OSs an instruction to perform a specified operation on the determined virtual I/O (detaching or mounting).

In step S513, the virtualization service unit 203 determines whether or not all responses to the specified operations are "success". When all responses are "success", the control proceeds to step S514, and when not all responses are "success", the control proceeds to step S517.

In step S514, the virtualization service unit 203 determines the control content. When the control content is mounting, the control proceeds to step S515, and when the control content is detaching, control proceeds to step S516.

In step S515, the virtualization service unit 203 returns to the issuance-source virtual OS 301 with the result of "success".
In step S516, the virtualization service unit 203 instructs the driver 206 to detach the specified I/O.

In step S517, the virtualization service unit 203 returns, with the result of failure, to the virtual OS as the issuance source of the communication data.

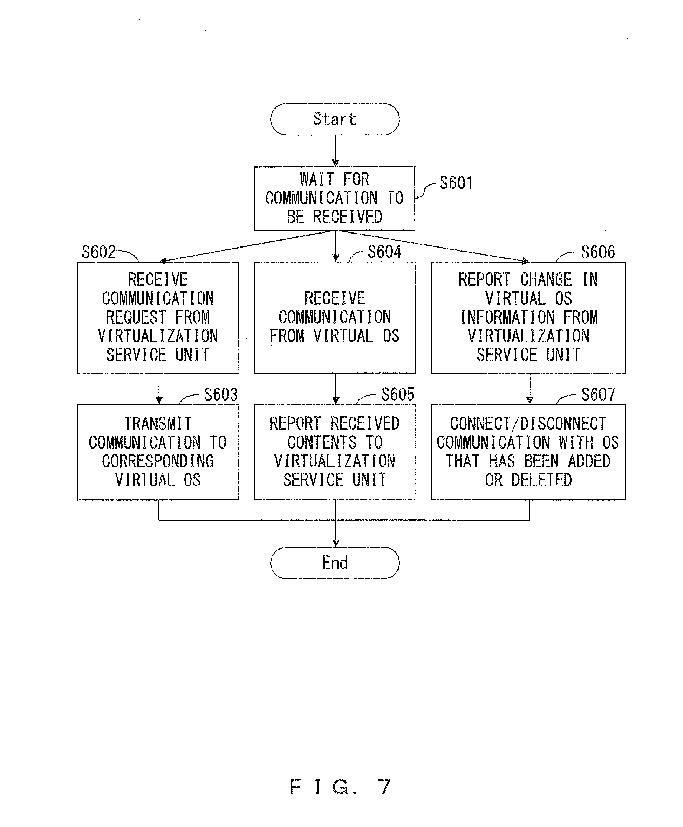

FIG. 7 illustrates a flowchart of a communication mechanism of the control OS according to an embodiment.
In step S601, the communication mechanism 202 waits for communication to be received.
In step S602, the communication mechanism 202 receives a communication request from the virtualization service unit 203.

In step S603, the communication mechanism 202 transmits communication to the corresponding virtual OS 301.
In step S604, the communication mechanism 202 receives communication from the virtual OS 301.

In step S605, the communication mechanism 202 reports the received content to the virtualization service unit 203.
In step S606, the communication mechanism 202 receives a modification report of the virtual OS information table from the virtualization service unit 203. The modification report includes information on a virtual OS that has been added (increased) or deleted (decreased).

In step S607, the communication mechanism 202 connects communication with the virtual OS 301 that has been added (increased) newly, or disconnects communication from the virtual OS 301 that has been deleted (decreased).

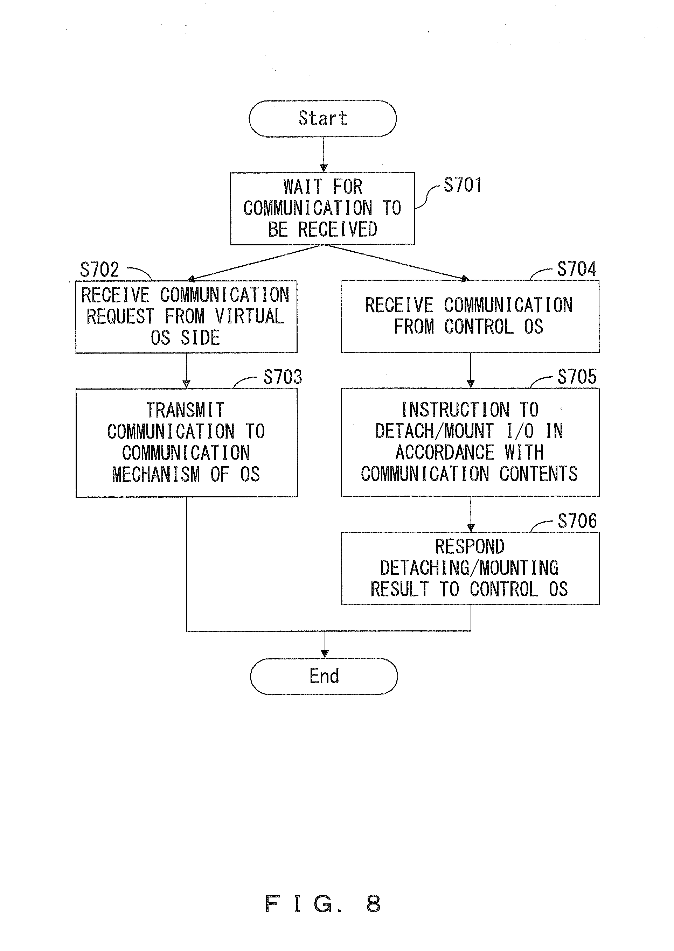

FIG. 8 illustrates a flowchart for a communication mechanism of a virtual OS according to an embodiment.
In step S701, the communication mechanism 302 waits for communications to be received. When a communication has come from the virtual OS side, the control proceeds to step S702, and when it has come from the control OS 201, the control proceeds to step S704.

In step S702, the communication mechanism 302 receives a communication request from the virtual OS 301.
In step S703, the communication mechanism 302 transmits a communication to the communication mechanism 202 of the control OS 201.

In step S704, the communication mechanism 302 receives a communication from the control OS 201.
In step S705, the communication mechanism 302 instructs, in accordance with the control content included in the communication, the driver 306 to detach or mount the I/O.

In step 5706, the communication mechanism 302 transmits the detaching result or the mounting result to the control OS 201.

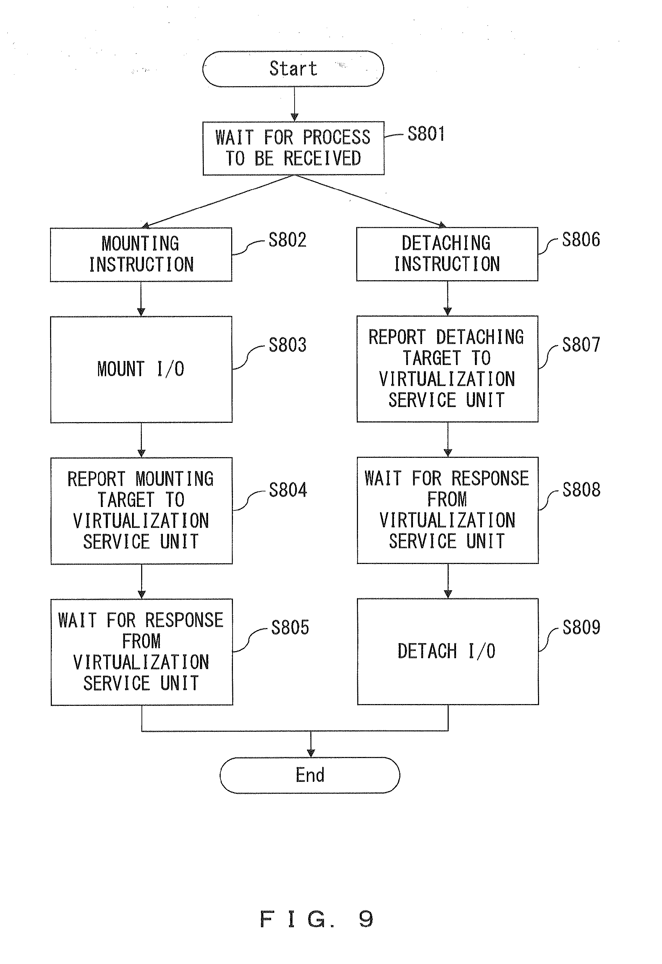

FIG. 9 is a flowchart for a driver of the control OS according to an embodiment.
In step S801, the driver 206 waits for a process to be received. When the process is a mounting instruction, the control proceeds to step S802, and when the process is a detaching instruction, the control proceeds to step S806.

In step S802, the driver 206 receives a mounting instruction.
In step S803, the driver 206 mounts the specified I/O.
In step S804, the driver 206 reports a mounting target to the virtualization service unit 203.

In step S805, the driver 206 waits for a response from the virtualization service unit 203.
In step S806, the driver 206 receives a detaching instruction.

In step S807, the driver 206 reports a detaching target to the virtualization service unit 203.
In step S808, the driver 206 waits for a response from the virtualization service unit 203.

In step S809, the driver 206 receives a response from the virtualization service unit 203, and detaches the I/O.

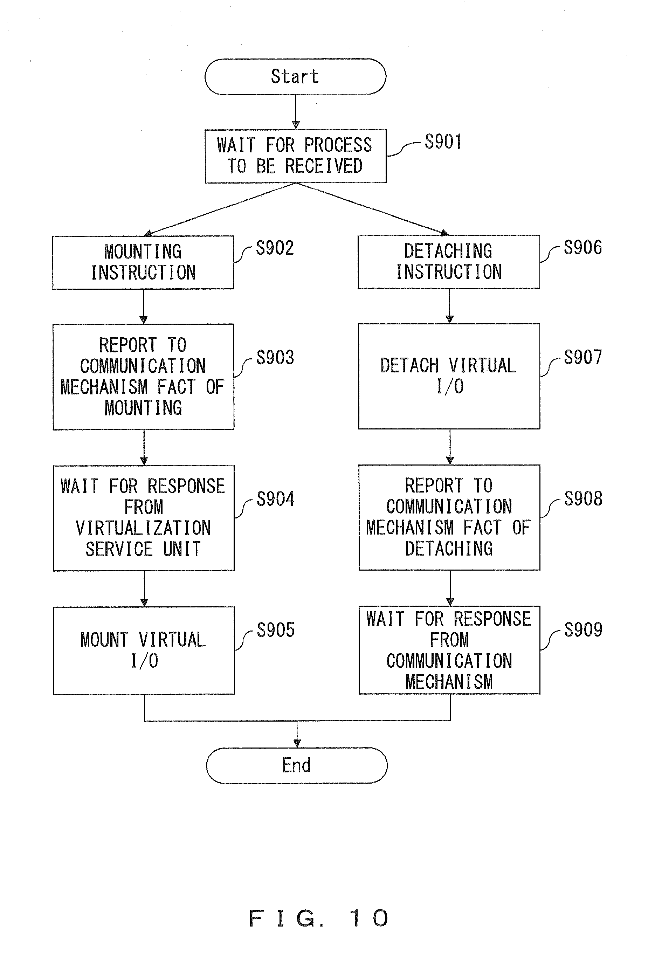

FIG. 10 illustrates a flowchart for a driver of a virtual OS according to an embodiment.
In step 5901, the driver 306 waits for a process to be received. When the process is a mounting instruction, the control proceeds to step S902, and when the process is a detaching instruction, the control proceeds to step S906.

In step S902, the driver 306 receives a mounting instruction.
In step s903, the driver 306 reports to the communication mechanism 302 the mounting of the virtual I/O.

In step S904, the driver 306 waits for a response from the virtualization service unit.
In step S905, the driver 306 mounts the virtual I/O after receiving the response.
In step S906, the driver 306 receives a detaching instruction.

In step S907, the driver 306 detaches the virtual I/O.
In step S908, the driver 306 reports to the communication mechanism 302 the detaching of the virtual I/O.
In step S908, a driver 309 waits for a response from the communication mechanism 302.

Next, explanations will be given for specific examples of detaching or mounting of an I/O (including a virtual I/O) according to an embodiment.

### (1) When an I/O is detached from the control OS

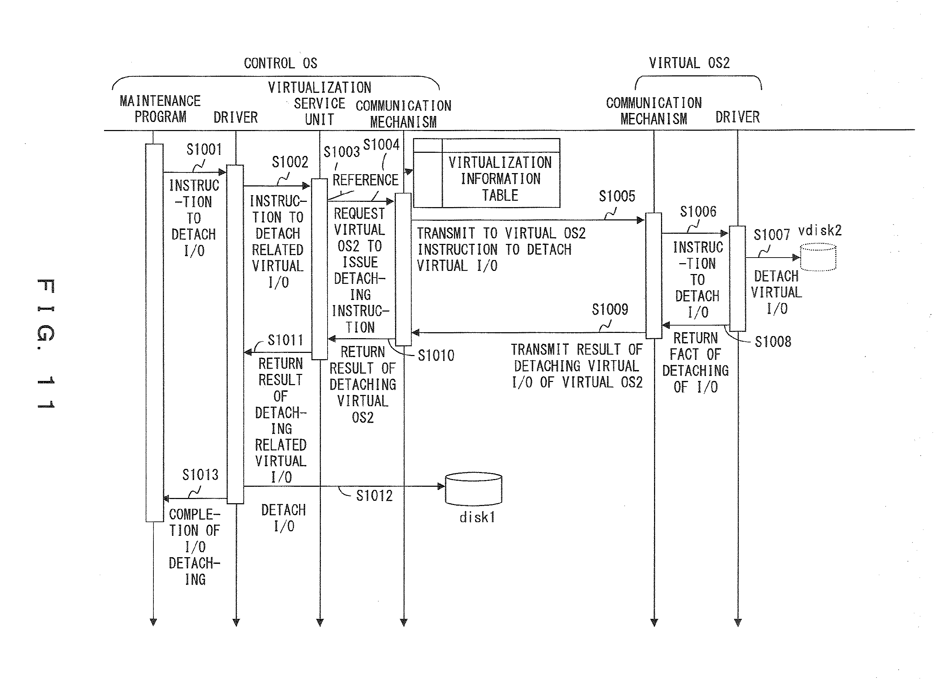

FIG. 11 is a sequence diagram for a case where an I/O is detached from the control OS.
In this example, explanations will be given for a case where disk1 is detached from the control OS.

In step S1001, the maintenance program 204 instructs the driver 206 to detach the I/O (disk1)
In step S1002, the driver 206 transmits to the virtualization service unit 203 an instruction to detach a virtual I/O related to disk1.

In step S1003, the virtualization service unit 203 refers to the virtual OS information table and the virtual I/O information table so as to determine a virtual I/O related to disk1 and a virtual OS that is using the virtual I/O. In this example, vdisk2 and virtual OS2 are determined to be the virtual I/O and the virtual OS, respectively.

In step S1004, the virtualization service unit 203 requests that the communication mechanism instruct virtual OS2 to detach vdisk2.
In step S1005, the communication mechanism 202 transmits to a communication mechanism 302-2 of virtual OS2 an instruction to detach the virtual I/O (vdisk2).

In step S1006, the communication mechanism 302-2 transmits to a driver 306-2 an instruction to detach the virtual I/O (vdisk2).
In step S1007, the driver 306-2 detaches the virtual I/O (vidsk2).

In step S1008, the driver 306-2 transmits to the communication mechanism 302-2 the fact that the virtual I/O (vdisk2) has been detached.
In step S1009, the communication mechanism 302-2 transmits the result of the detaching of the virtual I/O (vdisk2) of virtual OS2 to the communication mechanism 202 of the control OS.

In step S1010, the communication mechanism 202 transmits to the virtualization service unit 203 the result of the detaching of virtual OS2.
In step S1011, the virtualization service unit 203 transmits an instruction to detach the I/O (disk1) to the driver 206.

In step S1012, the driver 206 detaches disk1.
In step S1013, the driver 206 reports to the maintenance program 204 the completion of the I/O detaching.

### (2) When an I/O is mounted from the control OS

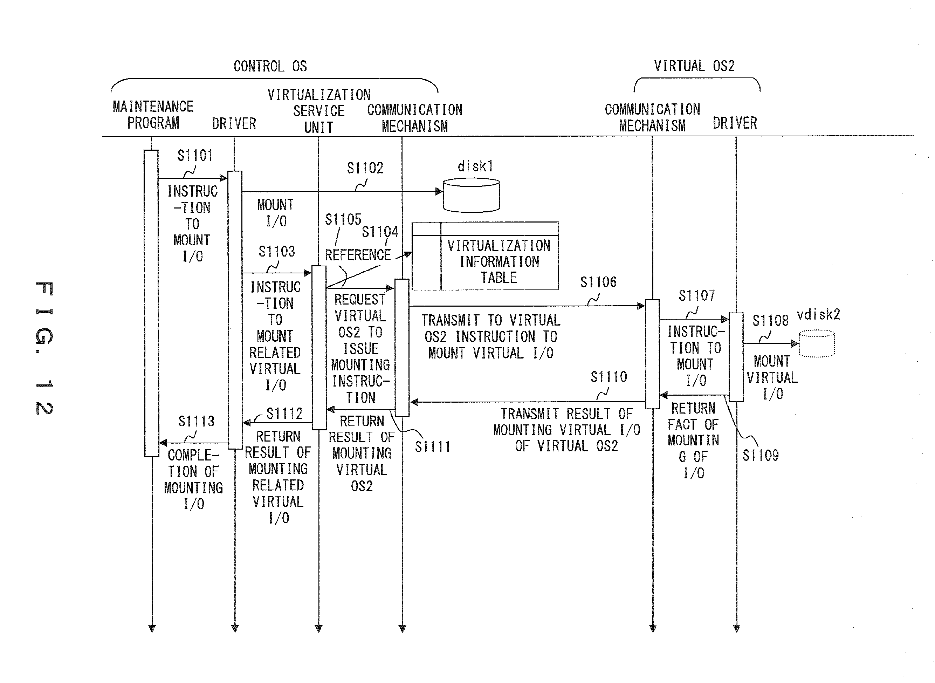

FIG. 12 is a sequence diagram for a case where an I/O is mounted from the control OS.
Explanations will be given for a case where disk1 is mounted from the control OS.

In step S1101, the maintenance program 204 instructs the driver to mount the I/O (disk1).
In step S1102, the driver 206 mounts disk1.
In step S1103, the driver 206 transmits to the virtualization service unit 203 an instruction to mount a virtual I/O related to disk1.

In step S1104, the virtualization service unit 203 refers to the virtual OS information table and the virtual I/O information table so as to determine a virtual I/O related to disk1 and a virtual OS that is using the virtual I/O. In this example, vdisk2 and virtual OS2 are determined to be the virtual I/O and the virtual OS, respectively.

In step S1105, the virtualization service unit 203 requests the communication mechanism 202 to instruct virtual OS2 to mount vdisk2.
In step S1106, the communication mechanism 202 transmits to the communication mechanism 302-2 of virtual OS2 an instruction to mount the virtual I/O (vdisk2).

In step S1107, the communication mechanism 302-2 transmits to the driver 306-2 the mounting of the virtual I/O (vdisk2).
In step S1108, the driver 306-2 mounts the virtual I/O (vdisk2).

In step S1109, the driver 306-2 reports to the communication mechanism 302-2 the fact that the virtual I/O (vdisk2) has been mounted.
In step S1110, the communication mechanism 302-2 transmits to the communication mechanism 202 of the control OS the result of the mounting of the virtual I/O (vdisk2) of virtual OS2.

In step S1111, the communication mechanism 202 transmits to the virtualization service unit 203 the received result of the mounting of virtual OS2.
In step S1112, the virtualization service unit 203 transmits to the driver 206 the result of the mounting of the virtual I/O (vdisk2) related to disk1.
In step S1113, the driver 206 reports the completion of the mounting of the I/O (disk1) to the maintenance program 204.

### (3) When an I/O that is not shared with a different virtual OS is detached from a virtual OS

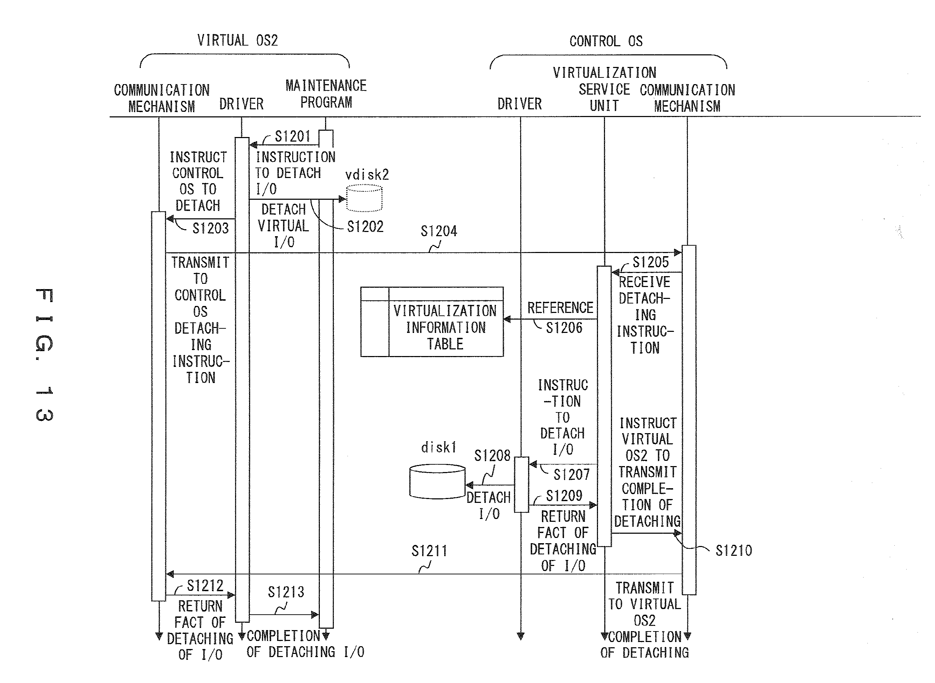

FIG. 13 illustrates a sequence diagram for a case where an I/O not shared by a different virtual OS is to be detached from a virtual OS.
In this example, a case will be explained where vdisk2 is to be detached from virtual OS2.

In step S1201, a maintenance program 304-2 instructs the driver 306-2 to detach the I/O (vdisk2).
In step S1202, the driver 306-2 detaches the virtual I/O (vdisk2).
In step 51203, the driver 306-2 transmits to the communication mechanism 302-2 an instruction for the control OS to detach an I/O related to vdisk2.

In step S1204, the communication mechanism 302-2 transmits to the control OS an instruction to detach an I/O related to vdisk2.
In step S1205, the communication mechanism 202 receives the detaching instruction, and transmits it to the virtualization service unit 203.

In step S1206, the virtualization service unit 203 refers to the virtual OS information table and the virtual I/O information table so as to determine an I/O related to vdisk2 and a virtual OS that is using the I/O. In this example, disk1 is determined to be an I/O related to vdisk2.

In step S1207, the virtualization service unit 203 transmits to the driver 206 an instruction to detach the I/O (disk1)
In step S1208, the driver 206 detaches disk1.

In step S1209, the driver 206 transmits to the virtualization service unit 203 the fact that I/O (disk1) has been detached.
In step S1210, the virtualization service unit 203 instructs the communication mechanism 202 to transmit to virtual OS2 the completion of the detaching of the I/O (disk1)

In step S1211, the communication mechanism 202 transmits to virtual OS2 the completion of the detaching of the I/O (disk1)
In step S1212, the communication mechanism 302-2 transmits to the driver 306 the fact that an I/O related to vdisk2 has been detached.

In step S1213, the driver 306-2 reports to the maintenance program 304-2 the completion of the detaching of the I/O (vdisk2).

### (4) When an I/O not shared by different virtual OSs is to be mounted from a virtual OS

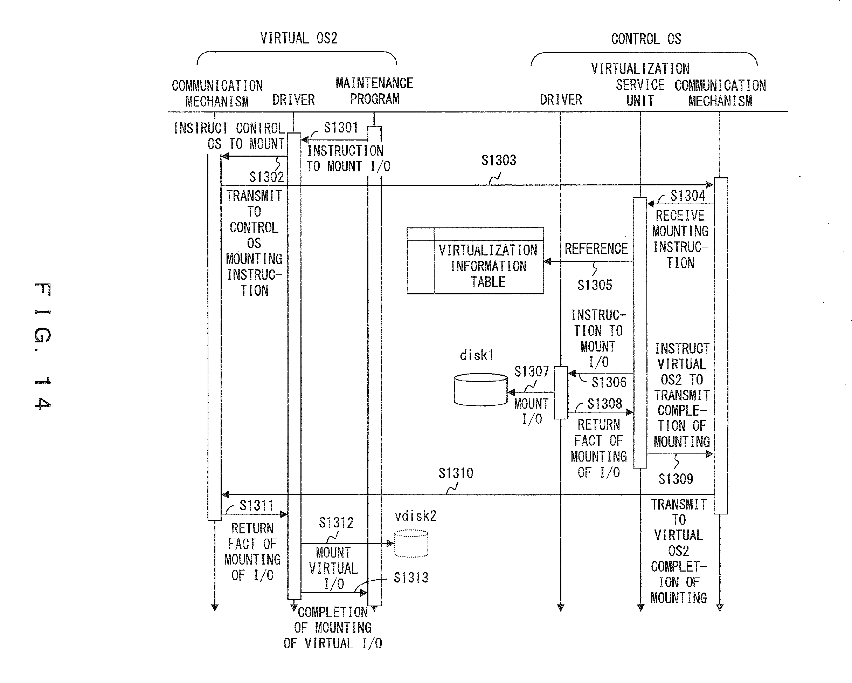

FIG. 14 is a sequence diagram for a case where an I/O that is not shared by a different virtual OS is to be mounted from a virtual OS.
In this example, a case will be explained where vdisk2 is to be mounted from virtual OS2.

In step S1301, the maintenance program 304-2 instructs the driver 306-2 to mount the I/O (vdisk2).
In step S1302, the driver 306-2 transmits to the communication mechanism 302-2 an instruction for the control OS to mount an I/O related to vdisk2.
In step S1303, the communication mechanism 302-2 transmits to the control OS an instruction to mount an I/O related to vdisk2.

In step S1304, the communication mechanism 202 receives the mounting instruction, and transmits it to the virtualization service unit 203.
In step S1305, the virtualization service unit 203 refers to the virtual OS information table and the virtual I/O information table so as to determine an I/O and virtual I/O related to vdisk2, and a virtual OS that is using the I/O. In this example, disk1 is determined to be an I/O related to vdisk2.

In step S1306, the virtualization service unit 203 transmits to the driver 206 an instruction to mount the I/O (disk1)
In step S1307, the driver 206 mounts disk1.

In step S1308, the driver 206 transmits to the virtualization service unit the fact that the I/O (disk1) has been mounted.
In step S1309, the virtualization service unit 203 instructs the communication mechanism 202 to transmit to virtual OS2 the completion of the mounting of the I/O (disk1)

In step S1310, the communication mechanism 202 transmits to virtual OS2 the completion of the mounting of the I/O (disk1)
In step S1311, the communication mechanism 302-2 transmits to the driver 306-2 the fact that the I/O (disk1) has been mounted.

In step S1312, the driver 306-2 mounts the virtual I/O (vdisk2).
In step S1313, the driver 306-2 reports to the maintenance program the completion of the mounting of the I/O (vdisk2).

### (5) when an instruction to detach an I/O shared by a plurality of virtual OSs has been issued from a virtual OS

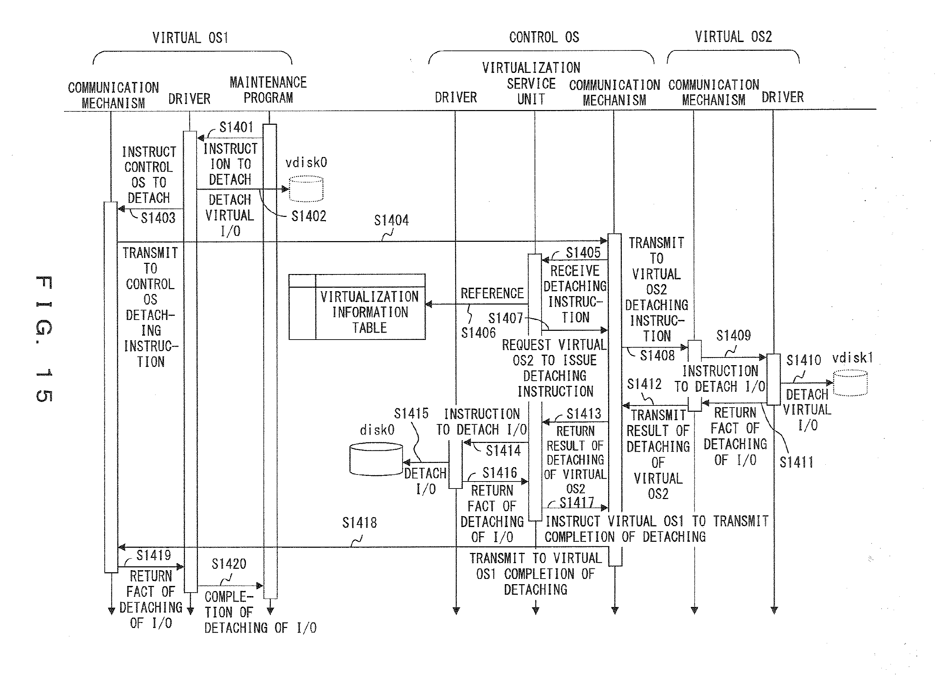

FIG. 15 is a sequence diagram illustrating a case where an instruction has been issued from a virtual OS to detach an I/O shared by a plurality of virtual OSs.
Explanations will be given for a case where vdisk0 is detached from the maintenance program of virtual OS1.

In step S1401, a maintenance program 304-1 instructs a driver 306-1 to detach the I/O (vdisk0).
In step S1402, the driver 306-1 detaches the virtual I/O (vdisk0).
In step S1403, the driver 306-1 transmits to a communication mechanism 302-1 an instruction for the control OS 201 to detach an I/O related to vdisk0.

In step S1404, the communication mechanism 302-1 transmits to the control OS 201 an instruction to detach an I/O related to vdisk0.
In step S1405, the maintenance program 204 receives the detaching instruction, and transmits it to the virtualization service unit 203.

In step S1406, the virtualization service unit 203 refers to the virtual OS information table and the virtual I/O information table so as to determine an I/O and virtual I/O related to vdisk0, and a virtual OS that is using the virtual I/O. In this example, disk0, vdisk1,and virtual OS2 are determined to be an I/O related to vdisk0, a virtual I/O related to vdisk0, and a virtual OS using vdisk1, respectively.

In step S1407, the virtualization service unit 203 requests the maintenance program 204 to instruct virtual OS2 to detach vdisk1.
In step S1408, the maintenance program 204 transmits to the communication mechanism 302-2 of virtual OS2 an instruction to detach the virtual I/O (vdisk1).

In step S1409, the communication mechanism 302-2 transmits to the driver 306-2 an instruction to detach the virtual I/O (vdisk1).
In step S1410, the driver 306-2 detaches the virtual I/O (vdisk1)

In step S1411, the driver 306-2 transmits to the communication mechanism 302-2 the fact that the virtual I/O (vdisk1) has been detached.
In step S1412, the communication mechanism 302-2 transmits to the communication mechanism 204 of the control OS the result of the detaching of the virtual I/O (vdisk1) of virtual OS2.

In step S1413, the communication mechanism 204 transmits to the virtualization service unit 203 the received result of virtual OS2.
In step S1414, the virtualization service unit 203 transmits to the driver 206 an instruction to detach the I/O (disk0).

In step S1415, the driver 206 detaches disk0.
In step S1416, the driver 206 transmits to the virtualization service unit 203 the fact that the I/O (disk0) has been detached.

In step S1417, the virtualization service unit 203 instructs the communication mechanism 204 to transmit to virtual OS1 the completion of the detaching of an I/O related to vdisk0.
In step S1418, the communication mechanism 204 transmits to virtual OS1 the completion of the detaching of the I/O related to vdisk0.

In step S1419, the communication mechanism 302-1 transmits to the driver 306-1 the fact that the I/O related to vdisk0 has been detached.
In step S1420, the driver 306-1 reports to the maintenance program the completion of the detaching of the I/O (vdisk0).

### (6) When an instruction to mount an I/O shared by a plurality of virtual OSs is issued by a virtual OS

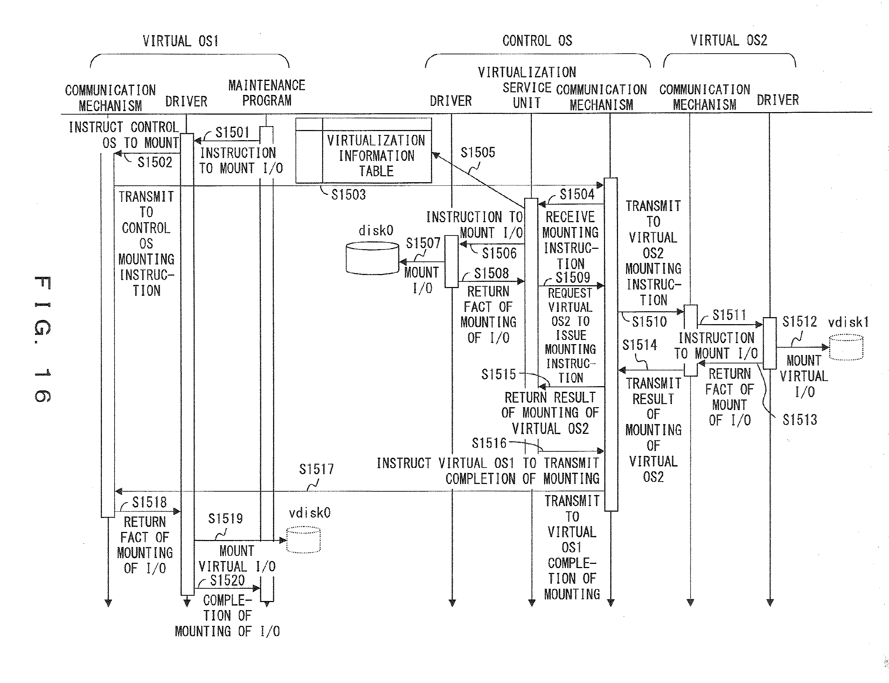

FIG. 16 is a sequence diagram for a case where an instruction has been issued to detach an I/O shared by a plurality of virtual OSs from a virtual OS.
In this example, explanations are given for a case where vdisk0 is mounted from the maintenance program of virtual OS1.

In step S1501, the maintenance program 304-1 instructs the driver 306-1 to mount the I/O (vdisk0).
In step s1502, the driver 306-1 transmits to the communication mechanism 302-1 an instruction for the control OS to mount the I/O related to vdisk0.
In step S1503, the communication mechanism 302-1 transmits to the control OS an instruction to mount the I/O related to vdisk0.

In step S1504, the communication mechanism 204 receives the mounting instruction, and transmits it to the virtualization service unit 203.
In step S1505, the virtualization service unit 203 refers to the virtual OS information table and the virtual I/O information table so as to determine the I/O and the virtual I/O related to vdisk0, and the virtual OS that is using the virtual I/O. In this example, disk0, vdisk1,and virtual OS2 are determined to be the I/O related to vdisk0, the virtual I/O related to vdisk0, and the virtual OS using vdisk1, respectively.

In step S1506, the virtualization service unit 203 transmits to the driver 206 an instruction to mount the I/O (disk0).
In step S1507, the driver 206 mounts disk0.

In step S1508, the driver 206 transmits to the virtualization service unit 203 the fact that the I/O (disk0) has been mounted.
In step S1509, the virtualization service unit 203 requests the communication mechanism 204 to give an instruction to mount vdisk1 to virtual OS2.

In step S1510, the communication mechanism 204 transmits to the communication mechanism 302-2 of virtual OS2 an instruction to mount the I/O (vdisk1).
In step S1511, the communication mechanism 302-2 transmits to the driver 306-2 an instruction to mount the I/O (vdisk1)

In step S1512, the driver 306-2 mounts the virtual I/O (vdisk1).
In step S1513, the driver 306-2 transmits to the communication mechanism 302-2 the fact that the virtual I/O (vdisk1) has been mounted.

In step S1514, the driver 306-2 transmits to the communication mechanism 204 of the control OS the result of the mounting of the virtual I/O (vdisk1).
In step S1515, the communication mechanism 204 transmits to the virtualization service unit 203 the received result of the mounting of the virtual OS2.

In step S1516, the virtualization service unit 203 instructs the communication mechanism 204 to transmit to the virtual OS1 the completion of the mounting of the I/O related to vdisk0.
In step S1517, the communication mechanism 204 transmits to virtual OS1 the completion of the mounting of the I/O related to vdisk0.

In step S1518, the communication mechanism 302-1 transmits to the driver 306-1 the fact that the I/O related to vdisk0 has been mounted.
In step S1519, the driver 306-1 mounts the virtual I/O (vdisk0).

In step S1520, the driver 306-1 reports the completion of the mounting of the I/O (vdisk0) to the maintenance program 304-1.
According to an OS of an embodiment, an I/O related to an I/O as a target of detaching or mounting is also detached or mounted in conjunction, making it possible to reduce troubles caused by forgetting to detach or mount.

## Claims

1. A detaching program to be operated on a control operating system for controlling a virtual operating system, that detaches a physical input/output device of the control operating system from the control operating system and that causes a computer having stored virtual input/output device information in which the physical input/output device and the virtual input/output device are associated and virtual operating system information in which the virtual input/output device and the virtual operating system are associated to execute a process, the process comprising:
a step of receiving an instruction to detach the physical input/output device;
a step of referring to the virtual input/output device information and the virtual operating system information so as to determine the virtual input/output device corresponding to the physical input/output device and the virtual operating system that is using the virtual input/output device;
a step of transmitting to the determined virtual operating system an instruction to detach the determined virtual input/output device;
a step of receiving from the determined virtual operating system a fact that the determined virtual input/output device has been detached; and
a step of detaching the physical input/output device from the control operating system after receiving the fact that the determined virtual input/output device has been detached.

2. A mounting program to be operated on a control operating system for controlling a virtual operating system, that mounts a physical input/output device of the control operating system on the control operating system and that causes a computer having stored virtual input/output device information in which the physical input/output device and the virtual input/output device are associated and virtual operating system information in which the virtual input/output device and the virtual operating system are associated to execute a process, the process comprising:
a step of receiving an instruction to mount the physical input/output device;
a step of mounting the physical input/output device on the control operating system;
a step of referring to the virtual input/output device information and the virtual operating system information so as to determine the virtual input/output device corresponding to the physical input/output device and the virtual operating system that is using the virtual input/output device;
a step of transmitting to the determined virtual operating system an instruction to mount the determined virtual input/output device; and
a step of receiving from the determined virtual operating system a fact that the determined virtual input/output device has been mounted.

3. A detaching program to be operated on a control operating system for controlling a virtual operating system, that detaches a physical input/output device related to a virtual input/output device from the control operating system and that causes a computer having stored virtual input/output device information in which the physical input/output device and the virtual input/output device are associated and virtual operating system information in which the virtual input/output device and the virtual operating system are associated to execute a process, the process comprising:
a step of receiving an instruction to detach the physical input/output device related to the virtual input/output device from the virtual operating system that is using the virtual input/output device;
a step of referring to the virtual input/output device information and the virtual operating system information so as to determine the physical input/output device related to the virtual input/output device, a different virtual input/output device related to the virtual input/output device, and a different virtual operating system that is using the different virtual input/output device;
a step of transmitting to the different virtual operating system an instruction to detach the different virtual input/output device;
a step of receiving from the different virtual operating system a fact that the different virtual input/output device has been detached;
a step of detaching the physical input/output device related to the virtual input/output device from the control operating system; and
a step of transmitting to the virtual operating system that is using the virtual input/output device a fact that the physical input/output device related to the virtual input/output device has been detached.

4. A detaching program to be operated on a virtual operating system controlled by a control operating system, that detaches a virtual input/output device from the virtual operating system and that causes a computer to execute a process, the process comprising:
a step of receiving an instruction to detach the virtual input/output device;
a step of detaching the virtual input/output device from the virtual operating system;
a step of transmitting to the control operating system an instruction to detach a physical input/output device related to the virtual input/output device; and
a step of receiving from the control operating system a fact that the physical input/output device related to the virtual input/output device has been detached.

5. A mounting program to be operated on a control operating system for controlling a virtual operating system, that mounts a physical input/output device related to a virtual input/output device on the control operating system and that causes a computer having stored virtual input/output device information in which the physical input/output device and the virtual input/output device are associated and virtual operating system information in which the virtual input/output device and the virtual operating system are associated to execute a process, the process comprising:
a step of receiving, from the virtual operating system that is using the virtual input/output device, an instruction to mount the physical input/output device related to the virtual input/output device;
a step of referring to the virtual input/output device information and the virtual operating system information so as to determine the physical input/output device related to the virtual input/output device, a different virtual input/output device related to the virtual input/output device, and a different virtual operating system that is using the different virtual input/output device;
a step of mounting the physical input/output device related to the virtual input/output device on the control operating system;
a step of transmitting to the different virtual operating system an instruction to mount the different virtual input/output device;
a step of receiving from the different virtual operating system a fact that the different virtual input/output device has been mounted; and
a step of transmitting to the virtual operating system that is using the virtual input/output device a fact that the physical input/output device related to the virtual input/output device has been mounted.

6. A mounting program to be operated on a virtual operating system controlled by a control operating system, that mounts a virtual input/output device on the virtual operating system and that causes a computer to execute a process, the process comprising:
a step of receiving an instruction to mount the virtual input/output device;
a step of transmitting to the control operating system an instruction to mount a physical input/output device related to the virtual input/output device;
a step of receiving from the control operating system a fact that the physical input/output device related to the virtual input/output device has been mounted; and
a step of mounting the virtual input/output device on the virtual operating system after receiving the fact that the physical input/output device related to the virtual input/output device has been mounted.

7. A detaching method executed by a computer on which a control operating system for controlling a virtual operating system and the virtual operating system operate and which has stored virtual input/output device information in which the physical input/output device and the virtual input/output device are associated and virtual operating system information in which the virtual input/output device and the virtual operating system are associated, the method comprising:
a step of receiving an instruction to detach the physical input/output device;
a step of referring to the virtual input/output device information and the virtual operating system information so as to determine the virtual input/output device corresponding to the physical input/output device and the virtual operating system that is using the virtual input/output device;
a step of transmitting to the determined virtual operating system an instruction to detach the determined virtual input/output device;
a step of receiving from the determined control operating system an instruction to detach the determined virtual input/output device;
a step of detaching the determined virtual input/output device from the virtual operating system;
a step of transmitting to the control operating system a fact that the determined virtual input/output device has been detached;
a step of receiving from the determined virtual operating system the fact that the determined virtual input/output device has been detached; and
a step of detaching the physical input/output device from the control operating system after receiving the fact that the determined virtual input/output device has been detached.

8. A mounting method executed by a computer on which a control operating system for controlling a virtual operating system and the virtual operating system operate and which has stored virtual input/output device information in which a physical input/output device and a virtual input/output device are associated and virtual operating system information in which the virtual input/output device and the virtual operating system are associated, the method comprising:
a step of receiving an instruction to mount the physical input/output device;
a step of mounting the physical input/output device on the control operating system;
a step of referring to the virtual input/output device information and the virtual operating system information so as to determine a virtual input/output device corresponding to the physical input/output device and the virtual operating system that is using the virtual input/output device;
a step of transmitting to the determined virtual operating system an instruction to mount the determined virtual input/output device;
a step of receiving from the control operating system an instruction to mount the determined virtual input/output device;
a step of mounting the determined virtual input/output device from the determined virtual operating system;
a step of transmitting to the control operating system a fact that the determined virtual input/output device has been mounted; and
a step of receiving a fact that the determined virtual input/output device has been mounted from the determined virtual operating system.

9. A detaching method executed by a computer on which a control operating system for controlling a virtual operating system and the virtual operating system operate and which has stored virtual input/output device information in which a physical input/output device and a virtual input/output device are associated and virtual operating system information in which the virtual input/output device and the virtual operating system are associated, the method comprising:
a step of receiving an instruction to detach the virtual input/output device;
a step of detaching the virtual input/output device from the virtual operating system;
a step of transmitting to the control operating system an instruction to detach the physical input/output device related to the virtual input/output device;
a step of receiving from a virtual operating system that is using the virtual input/output device an instruction to detach the physical input/output device related to the virtual input/output device;
a step of referring to the virtual input/output device information and the virtual operating system information so as to determine the physical input/output device related to the virtual input/output device, a different virtual input/output device related to the virtual input/output device, and a different virtual operating system that is using the different virtual input/output device;
a step of transmitting to the different virtual operating system an instruction to detach the different virtual input/output device;
a step of receiving from the control operating system an instruction to detach the different virtual input/output device;
a step of detaching the different virtual input/output device from the different virtual operating system;
a step of transmitting to the control operating system a fact that the different virtual input/output device has been detached;
a step of receiving from the different virtual operating system a fact that the different virtual input/output device has been detached;
a step of detaching from the control operating system the physical input/output device related to the virtual input/output device;
a step of transmitting to the virtual operating system that is using the virtual input/output device a fact that the physical input/output device related to the virtual input/output device has been detached; and
a step of receiving from the control operating system a fact that the physical input/output device related to the virtual input/output device has been detached.

10. A mounting method executed by a computer on which a control operating system for controlling a virtual operating system and the virtual operating system operate and which has stored virtual input/output device information in which a physical input/output device and a virtual input/output device are associated and virtual operating system information in which the virtual input/output device and the virtual operating system are associated, the method comprising:
a step of receiving an instruction to mount the virtual input/output device;
a step of transmitting to the control operating system an instruction to mount the physical input/output device related to the virtual input/output device;
a step of receiving from the virtual operating system that is using the virtual input/output device an instruction to mount the physical input/output device related to the virtual input/output device;
a step of referring to the virtual input/output device information and the virtual operating system information so as to determine the physical input/output device related to the virtual input/output device, a different virtual input/output device related to the virtual input/output device, and a different virtual operating system that is using the different virtual input/output device;
a step of mounting on the control operating system the physical input/output device related to the virtual input/output device;
a step of transmitting to the different virtual operating system an instruction to mount the different virtual input/output device;
a step of receiving from the control operating system an instruction to mount the different virtual input/output device;
a step of mounting the different virtual input/output device on the different virtual operating system;
a step of transmitting to the control operating system a fact that the different virtual input/output device has been mounted;
a step of receiving a fact that the different virtual input/output device has been mounted from the different virtual operating system;
a step of transmitting to the virtual operating system that is using the virtual input/output device a fact that the physical input/output device related to the virtual input/output device has been mounted;
a step of receiving from the control operating system a fact that the physical input/output device related to the virtual input/output device has been mounted; and
a step of mounting the virtual input/output device on the virtual operating system after receiving the fact that the physical input/output device related to the virtual input/output device has been mounted.
